# EUROPEAN PATENT APPLICATION

(11) **EP 4 454 481 A2**
(43) Date of publication of application: **30.10.2024**
(21) Application number: 24193296.1
(22) Date of filing: 20.08.2020
(51) Int. Cl.: A23L 27/30

(54) **METHOD FOR PRODUCING AQUEOUS COMPOSITION CONTAINING REBAUDIOSIDE D, SWEETENING COMPOSITION CONTAINING REBAUDIOSIDE D, AND BEVERAGE CONTAINING SWEETENING COMPOSITION**

(30) Priority: 23.08.2019 JP 2019153111
(62) Divisional of application: 20858052.2
(71) Applicant: Suntory Holdings Limited, Osaka-shi, Osaka 530-8203 (JP)
(72) Inventor: URAI, Soichiro, Kanagawa, 211-0067 (JP); NAGAO, Koji, Kanagawa, 211-0067 (JP); YOKOO, Yoshiaki, Kanagawa, 211-0067 (JP); RENTLE, Georgina, Uxbridge, UB11 1BA (GB); GEZGIN, Zafer, Uxbridge, UB11 1BA (GB)
(74) Representative: Mewburn Ellis LLP

(57) **Abstract**

An aspect of the present invention provides a method for producing a rebaudioside D-containing aqueous composition comprising rebaudioside D at a concentration of 500 ppm by weight or more, the method comprising a step of stirring for dispersing a steviol glycoside component containing rebaudioside D and water in a temperature range of 40°C to 100°C under high shear at a tip speed (peripheral speed) of a rotor of 15 m/s or more, wherein the steviol glycoside component comprises more than 50% by weight of rebaudioside D based on a total weight of the steviol glycoside component.

## Description

### Technical Field

The present invention relates to a method for producing a rebaudioside D-containing aqueous composition comprising rebaudioside D at a concentration of 500 ppm or more. The present invention relates to a sweetening composition comprising rebaudioside D at a concentration of 500 ppm or more. The present invention relates to a drink comprising the sweetening composition.

### Background Art

Stevia extract extracted from leaves of stevia is used as a natural sweetener instead of sugar. Steviol glycosides in stevia extract include stevioside, rebaudioside A, rebaudioside D, rebaudioside M and the like. Rebaudioside D, in particular, has a natural sweet flavor and is suitable for drinks and the like, but is difficult to be dissolved in water at room temperature (25°C) at high concentration (500 ppm or more).

Patent Literature 1 discloses a technique for dissolving rebaudioside D in water at high concentration by adding, to water, rebaudioside D and a stevioside composition (a mixture of stevioside and another steviol glycoside such as Reb. A) in an amount equal to or more than that of rebaudioside D at a high temperature of 65°C and mixing the solution with stirring.

### Citation List

### Patent Literature

Patent Literature 1: Japanese Patent Application Laid-Open No. 2018-535656

### Summary of Invention

### Technical Problem

A solution prepared by dissolving rebaudioside D in water at high concentration at high temperature has the problem of reprecipitation of rebaudioside D over time after production. In such circumstances improvement of solution stability of rebaudioside D dissolved in water at high concentration is desired.

### Solution to Problem

The present invention includes the following embodiments.
[1] A method for producing a rebaudioside D-containing aqueous composition comprising rebaudioside D at a concentration of 500 ppm by weight or more,
   the method comprising: a step of stirring for dispersing a steviol glycoside component comprising rebaudioside D and water in a temperature range of 40°C to 100°C under high shear at a tip speed (peripheral speed) of a rotor of 15 m/s or more, wherein the steviol glycoside component comprises more than 50% by weight of rebaudioside D based on a total weight of the steviol glycoside component.
[2] The method according to the above [1], wherein in the step of stirring for dispersing, the steviol glycoside component and water are stirred in the presence of a defoaming agent.
[3] The method according to the above [2], wherein the defoaming agent is selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, calcium sulfate, a phosphate, a fumarate, a gluconate, a succinate, a lactate, and a mixture of two or more thereof.
[4] The method according to the above [2], wherein the defoaming agent is selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, and a mixture of two or more thereof.
[5] The method according to any of the above [2] to [4], wherein a ratio of a weight of the defoaming agent (W_{def}) to a weight of rebaudioside D (W_{reb}) (W_{def}/W_{reb}) is 0.01 or more.
[6] The method according to any of the above [1] to [5], wherein a concentration of rebaudioside D in the rebaudioside D-containing aqueous composition is 1000 to 5000 ppm by weight.
[7] The method according to any of the above [1] to [6], wherein when the rebaudioside D-containing aqueous composition is stored in an environment of atmospheric pressure and a temperature of 10°C after production, a ratio of a concentration of rebaudioside D in the rebaudioside D-containing aqueous composition on day 38 after the production (C₁) to a concentration of rebaudioside D in the rebaudioside D-containing aqueous composition on day 0 of the production (C₀) (C₁/C₀) is 0.75 or more.
[8] The method according to any of the above [1] to [7], wherein the rebaudioside D-containing aqueous composition is a concentrated liquid for a drink.
[9] A sweetening composition comprising rebaudioside D at a concentration of 500 ppm by weight or more, water and a steviol glycoside component,
   wherein the steviol glycoside component comprises more than 50% by weight of rebaudioside D based on a total weight of the steviol glycoside component.
[10] The sweetening composition according to the above [9], further comprising one or more selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, calcium sulfate, a phosphate, a fumarate, a gluconate, a succinate, a lactate, and a mixture of two or more thereof.
[11] The sweetening composition according to the above [9], further comprising one or more selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, and a mixture of two or more thereof.
[12] The sweetening composition according to any of the above [9] to [11], which does not comprise one or more of stevioside, polyol and a hydrophilic polymer.
[13] The sweetening composition according to any of the above [9] to [12], wherein when the sweetening composition is stored in an environment of atmospheric pressure and a temperature of 10°C after production, a ratio of a concentration of rebaudioside D in the sweetening composition on day 38 after the production (C₁) to a concentration of rebaudioside D in the sweetening composition on day 0 of the production (C₀) (C₁/C₀) is 0.75 or more.
[14] The sweetening composition according to any of the above [9] to [13], which is a concentrated liquid for a drink.
[15] A drink comprising the sweetening composition according to the above [14] and water for dilution.
[16] The drink according to the above [15], further comprising one or more selected from the group consisting of rebaudioside A, rebaudioside B, rebaudioside E, rebaudioside F, rebaudioside M, rebaudioside N, stevia extract, a steviol glycoside having a structure to which rhamnose is bonded, stevioside, mogroside V, sucrose, high fructose corn syrup, erythritol, corn syrup, aspartame, sucralose, acesulfame potassium, saccharin and xylitol.
[17] A method for producing a rebaudioside D-containing aqueous composition comprising rebaudioside D at a concentration of 500 ppm by weight or more,
   the method comprising a step of stirring for dispersing a steviol glycoside component comprising rebaudioside D and water in the presence of a defoaming agent.
[18] The method according to the above [17], wherein the rebaudioside D-containing aqueous composition comprises more than 50% by weight of rebaudioside D based on a total weight of the steviol glycoside component.

### Advantageous Effects of Invention

An embodiment of the present invention improves solution stability of rebaudioside D dissolved in water at high concentration. Furthermore, an embodiment of the present invention can eliminate or reduce foam generated by stirring for dispersing under high shear. Moreover, in an embodiment of the present invention, rebaudioside D can be dissolved in water in a stable manner without using stevioside which is bitter and leaves a bad aftertaste.

### Brief Description of Drawings

[Figure 1] Fig. 1 is a graph relating to Example 1 of the present invention.
[Figure 2] Fig. 2 is a graph relating to Example 1 of the present invention.
[Figure 3] Fig. 3 is a view relating to Example 2 of the present invention.
[Figure 4] Fig. 4 is a graph relating to Example 4 of the present invention.
[Figure 5] Fig. 5 is a graph relating to Example 5 of the present invention.

### Description of Embodiments

Hereinafter the present invention will be described in more detail. The following embodiments only illustrate the present invention, and do not limit the present invention. The present invention may be practiced in various modes as long as the modes do not deviate from the gist of the present invention. The present description includes the contents disclosed in the description and drawings of Japanese Patent Application No. 2019-153111 filed on August 23, 2019, to which the present application claims priority.

In the present description, both "rebaudioside" and "Reb." mean "rebaudioside." For example, rebaudioside D is also referred to as Reb. D.

The "steviol glycoside component" includes at least rebaudioside D. When the steviol glycoside component includes a steviol glycoside component other than rebaudioside D, the steviol glycoside component also includes one or more selected from the group consisting of stevioside, rebaudioside A, rebaudioside B, rebaudioside C, rebaudioside E, rebaudioside F, rebaudioside G, rebaudioside H, rebaudioside I, rebaudioside J, rebaudioside K, rebaudioside L, rebaudioside M, rebaudioside N, rebaudioside O, rebaudioside Q, rebaudioside R, dulcoside A, rubusoside, steviolmonoside, and steviolbioside.

The "defoaming agent" is a compound or a composition which acts to eliminate or reduce foam generated when a solution containing rebaudioside D is stirred for dispersing. Furthermore, the defoaming agent may act to reduce generation of foam itself caused by stirring for dispersing a solution containing rebaudioside D. When a rebaudioside D-containing aqueous composition is used for a drink, the rebaudioside D-containing aqueous composition (or the drink) contains the defoaming agent in such an amount that causes no safety problem even when the defoaming agent remains in the drink.

The "rebaudioside D-containing aqueous composition" may also be used as a sweetening composition for drinks and the like.

"ppm" means "ppm by weight" (mg/ kg) unless otherwise specified. "ppm by weight" may be the same as "mg/ L" for an aqueous composition, a sweetening composition or a drink which mainly contains water and has a specific gravity of about 1.

The content (ppm) of rebaudioside D, the steviol glycoside component, the defoaming agent and the like in rebaudioside D-containing aqueous composition (or sweetening composition) may be calculated based on the amount of raw materials added, or measured by a known method of analysis such as liquid chromatography.

### 1. Rebaudioside D-containing aqueous composition (sweetening composition)

In an embodiment of the present invention, the rebaudioside D-containing aqueous composition is a solution containing rebaudioside D at a concentration of 500 ppm or more, and contains a steviol glycoside component including rebaudioside D, and water. The steviol glycoside components include more than 50% by weight of rebaudioside D based on the total weight of the steviol glycoside components.

Rebaudioside D is not particularly limited, and may be derived from plant, may be those chemically synthesized and those biosynthesized. For example, while rebaudioside D may be isolated and purified from a plant body containing a large amount of rebaudioside D, it may be prepared by chemical synthesis or biosynthesis. In an embodiment of the present invention, rebaudioside D may be prepared by purifying stevia extract, or decomposing rebaudioside M.

Water is tap water, natural water, pure water (0.05 to 1 mS/m), or a mixture of two or more of them.

In an embodiment of the present invention, the rebaudioside D-containing aqueous composition is a solution containing rebaudioside D at a concentration of 500 ppm or more, and contains a steviol glycoside component, water and a defoaming agent. The steviol glycoside components include more than 50% by weight of rebaudioside D based on the total weight of the steviol glycoside components.

In an embodiment of the present invention, the concentration of rebaudioside D in the rebaudioside D-containing aqueous composition at atmospheric pressure at low temperature (10°C) to room temperature (25°C) is 500 ppm or more. In an embodiment of the present invention, the concentration of rebaudioside D in the rebaudioside D-containing aqueous composition (weight of rebaudioside D/ weight of rebaudioside D-containing aqueous composition) at room temperature (25°C) is in the range of 500 ppm to 5,000 ppm, 600 ppm to 4,900 ppm, 700 ppm to 4800 ppm, 800 ppm to 4700 ppm, 900 ppm to 4600 ppm, 1000 ppm to 4500 ppm, 1100 ppm to 4400 ppm, 1200 ppm to 4300 ppm, 1300 ppm to 4200 ppm, 1400 ppm to 4100 ppm, 1500 ppm to 4000 ppm, 1600 ppm to 3900 ppm, 1700 ppm to 3800 ppm, 1800 ppm to 3700 ppm, 1900 ppm to 3600 ppm, 2000 ppm to 3500 ppm, 2100 ppm to 3400 ppm, 2200 ppm to 3300 ppm, 2300 ppm to 3200 ppm, 2400 ppm to 3100 ppm, 2500 ppm to 3000 ppm, 2600 ppm to 2900 ppm, 2700 ppm to 2800 ppm, 2000 ppm to 4000 ppm, 2200 ppm to 3800 ppm, 2400 ppm to 3600 ppm, 2600 ppm to 3400 ppm, or 2800 ppm to 3200 ppm.

In an embodiment of the present invention, the lower limit of the concentration of rebaudioside D in the rebaudioside D-containing aqueous composition at atmospheric pressure at low temperature (10°C) to room temperature (25°C) is 500 ppm, 600 ppm, 700 ppm, 800 ppm, 900 ppm, 1000 ppm, 1050 ppm, 1100 ppm, 1150 ppm, 1200 ppm, 1250 ppm, 1300 ppm, 1350 ppm, 1400 ppm, 1450 ppm, 1500 ppm, 1550 ppm, 1600 ppm, 1650 ppm, 1700 ppm, 1750 ppm, 1800 ppm, 1850 ppm, 1900 ppm, 1950 ppm, 2000 ppm, 2050 ppm, 2100 ppm, 2150 ppm, 2200 ppm, 2250 ppm, 2300 ppm, 2350 ppm, 2400 ppm, 2450 ppm, 2500 ppm, 2550 ppm, 2600 ppm, 2650 ppm, 2700 ppm, 2750 ppm, 2800 ppm, 2850 ppm, 2900 ppm, 2950 ppm, 3000 ppm, 3100 ppm, 3200 ppm, 3300 ppm, 3400 ppm, or 3500 ppm.

In an embodiment of the present invention, the upper limit of the concentration of rebaudioside D in the rebaudioside D-containing aqueous composition at atmospheric pressure at low temperature (10°C) to room temperature (25°C) is 5,000 ppm, 4,900 ppm, 4800 ppm, 4700 ppm, 4600 ppm, 4500 ppm, 4400 ppm, 4300 ppm, 4200 ppm, 4100 ppm, 4000 ppm, 3950 ppm, 3900 ppm, 3850 ppm, 3800 ppm, 3750 ppm, 3700 ppm, 3650 ppm, 3600 ppm, 3550 ppm, 3500 ppm, 3450 ppm, 3400 ppm, 3350 ppm, 3300 ppm, 3250 ppm, 3200 ppm, 3150 ppm, 3100 ppm, 3050 ppm, 3000 ppm, 2950 ppm, 2900 ppm, 2850 ppm, or 2800 ppm.

In an embodiment of the present invention, the steviol glycoside component in the rebaudioside D-containing aqueous composition comprises more than 50% by weight to 100% by weight, 55% by weight to 100% by weight, 60% by weight to 100% by weight, 65% by weight to 100% by weight, 70% by weight to 100% by weight, 75% by weight to 100% by weight, 80% by weight to 100% by weight, 82% by weight to 100% by weight, 84% by weight to 100% by weight, 86% by weight to 100% by weight, 88% by weight to 100% by weight, 90% by weight to 100% by weight, 92% by weight to 100% by weight, 94% by weight to 100% by weight, 96% by weight to 100% by weight, 98% by weight to 100% by weight, more than 50% by weight to 95% by weight, 55% by weight to 90% by weight, 60% by weight to 85% by weight, 65% by weight to 80% by weight, or 70% by weight to 75% by weight of rebaudioside D based on the total weight of the steviol glycoside component.

In an embodiment of the present invention, the steviol glycoside component in the rebaudioside D-containing aqueous composition comprises 90% by weight or more of rebaudioside D based on the total weight of the steviol glycoside component. In an embodiment of the present invention, the steviol glycoside component does not comprise one or more of stevioside, rebaudioside A, rebaudioside B, rebaudioside C, rebaudioside E, rebaudioside F, rebaudioside G, rebaudioside H, rebaudioside I, rebaudioside J, rebaudioside K, rebaudioside L, rebaudioside M, rebaudioside N, rebaudioside O, rebaudioside Q, rebaudioside R, dulcoside A, rubusoside, steviolmonoside, and steviolbioside. In an embodiment of the present invention, the steviol glycoside component does not comprise stevioside. In an embodiment of the present invention, the steviol glycoside component comprises more than 50% by weight of rebaudioside D and less than 50% by weight of rebaudioside M based on the total weight of the steviol glycoside component. In an embodiment of the present invention, the steviol glycoside component only consists of more than 50% by weight of rebaudioside D and rebaudioside M based on the total weight of the steviol glycoside component.

In an embodiment of the present invention, the rebaudioside D-containing aqueous composition does not comprise one or more of polyol such as erythritol and a hydrophilic polymer.

In an embodiment of the present invention, the defoaming agent included in the rebaudioside D-containing aqueous composition is selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, calcium sulfate, a phosphate, a fumarate, a gluconate, a succinate, a lactate, and a mixture of two or more thereof. In an embodiment of the present invention, the defoaming agent is citric acid, L-ascorbic acid, DL-malic acid, hydrochloric acid, a citrate, an L-ascorbate, a DL-malate, potassium chloride, sodium chloride, magnesium chloride, calcium chloride or a mixture of two or more of them. In an embodiment of the present invention, the defoaming agent is sodium citrate, sodium L-ascorbate, sodium DL-malate, sodium chloride, or a mixture of two or more thereof. In an embodiment of the present invention, the defoaming agent is citric acid, L-ascorbic acid, DL-malic acid, hydrochloric acid, sodium chloride or trisodium citrate.

In an embodiment of the present invention, the ratio of the weight of the defoaming agent (W_{def}) to the weight of rebaudioside D (W_{reb}) (W_{def}/W_{reb}) in rebaudioside D-containing aqueous composition is 0.01 or more. In an embodiment of the present invention, the lower limit of the ratio (W_{def}/ W_{reb}) is 0.05, 0.1, 0.2, 0.3, 0.4, 0.5, 0.6, 0.7, 0.8, 0.9, 1, 2, 3, 4, 5, or 6. In an embodiment of the present invention, the upper limit of the ratio (W_{def}/ W_{reb}) is 10, 20, 30, 40, or 50 or more. In an embodiment of the present invention, the upper limit of the ratio (W_{def}/ W_{reb}) is 30, 28, 26, 24, 22, 21, 20, 19, 18, 17, 16, 15, 14, 13, 12, 11, 10, 9, 8, 7, 6, 5, 4, 3, 2, 1, 0.5, or 0.1. In an embodiment of the present invention, when the rebaudioside D-containing aqueous composition is used for a drink, the upper limit of the ratio (W_{def}/W_{reb}) may be 4, preferably 2 so that the drink is not too tart. In an embodiment of the present invention, the ratio (W_{def}/W_{reb}) may be in the range of 0.01 to 30, in the range of 0.01 to 26, in the range of 0.01 to 24, in the range of 0.01 to 22, in the range of 0.01 to 20, in the range of 0.01 to 15, in the range of 0.01 to 10, in the range of 0.01 to 6, in the range of 0.01 to 5, in the range of 0.01 to 4, in the range of 0.01 to 3, in the range of 0.01 to 2, in the range of 0.01 to 1, in the range of 0.1 to 10, in the range of 0.1 to 5, in the range of 0.1 to 2, or in the range of 0.5 to 2.

In an embodiment of the present invention, when the rebaudioside D-containing aqueous composition is stored airtight in an environment of atmospheric pressure and a temperature of 10°C after production, the ratio of the concentration of rebaudioside D in the rebaudioside D-containing aqueous composition on day 38 (i.e. 38 days) after the production (C₁) to the concentration of rebaudioside D in the rebaudioside D-containing aqueous composition on day 0 of the production (C₀) (C₁/C₀) is 0.75 or more. In an embodiment of the present invention, the ratio (C₁/C₀) is 0.78 or more, 0.80 or more, 0.85 or more, 0.90 or more, or 0.95 or more. The ratio (C₁/C₀) does not exceed 1.

In an embodiment of the present invention, the rebaudioside D-containing aqueous composition is a concentrated liquid for a drink. The concentrated liquid for a drink comprises a supersaturated solution of rebaudioside D.

An embodiment of the invention is a drink comprising water for dilution and a rebaudioside D-containing aqueous composition as a sweetening composition. In an embodiment of the present invention, the drink comprises a sweetener selected from the group consisting of rebaudioside A, rebaudioside B, rebaudioside E, rebaudioside F, rebaudioside M, rebaudioside N, stevia extract, a steviol glycoside having a structure to which rhamnose is bonded, stevioside, mogroside V, sucrose, high fructose corn syrup, erythritol, corn syrup, aspartame, sucralose, acesulfame potassium, saccharin and xylitol.

In an embodiment of the present invention, the drink is a carbonated drink. Examples of carbonated drinks include a soft drink, a non-alcoholic drink and an alcoholic drink, and are more specifically a sparkling drink, cola, diet cola, ginger ale, a soda pop, a fruit-flavored carbonated drink and fruit-flavored carbonated water, but the drink is not limited thereto.

In an embodiment of the present invention, the drink may contain a sweetener other than the steviol glycoside component. The sweetener is not particularly limited, and the drink may also contain, for example, one or more sweeteners selected from the group consisting of sucrose, high fructose corn syrup, erythritol, mogroside V, corn syrup, aspartame (also referred to as a L-phenylalanine compound), sucralose, acesulfame potassium, saccharin and xylitol. It is preferable to use a natural sweetener, and it is particularly preferable to use sucrose, high fructose corn syrup and corn syrup, in order to provide freshness, smoothness, a natural flavor and a moderate rich taste. One of the sweetening components may be used, or a plurality of them may be used.

In an embodiment of the present invention, the drink may be an alcoholic drink containing alcohol. Alcohol means ethyl alcohol (ethanol) unless otherwise specified. The type of the alcoholic drink according to the present invention is not particularly limited as long as it contains alcohol. The alcoholic drink may be beer, low-molt beer, shochu highball or cocktail, or may be non-alcoholic beer, shochu highball-taste drink or a soft drink.

### 2. Method for producing rebaudioside D-containing aqueous composition

An embodiment of the present invention relates to a method for producing a rebaudioside D-containing aqueous composition comprising rebaudioside D at a concentration of 500 ppm by weight or more. The production method comprises a step of stirring for dispersing a steviol glycoside component comprising rebaudioside D and water in a temperature range of 40°C to 100°C under high shear at a tip speed (peripheral speed) of a rotor of 15 m/s or more. The steviol glycoside component comprises more than 50% by weight of rebaudioside D based on the total weight of the steviol glycoside component. Details of water and the steviol glycoside component are as described above.

The step of stirring for dispersing comprises adding a powdery (or liquid) steviol glycoside component to a container containing water and increasing the temperature of the solution in the container to a temperature range of 40°C to 100°C with mixing (or without mixing) the solution in the container. The temperature of the solution may be increased by a heating means such as a heater, or may be increased using kinetic energy caused by stirring for dispersing, or they may be combined. The temperature range may be 45°C to 100°C, 47°C to 100°C, 50°C to 100°C, 55°C to 100°C, 57°C to 100°C, 60°C to 100°C, 62°C to 100°C, 65°C to 100°C, 67°C to 100°C, 70°C to 100°C, 72°C to 100°C, 74°C to 100°C, 76°C to 100°C, 78°C to 100°C, 80°C to 100°C, 82°C to 100°C, 84°C to 100°C, 86°C to 100°C, 88°C to 100°C, 90°C to 100°C, 40°C to 90°C, 40°C to 80°C, 40°C to 70°C, 40°C to 69°C, 45°C to 68°C, 50°C to 67°C, 55°C to 66°C, 60°C to 65°C, or 48°C to 65°C. The lower limit of the temperature range may be 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C, 72°C, 74°C, 76°C, 78°C, 80°C, 82°C, 84°C, 86°C, 88°C, or 90°C. The upper limit of the temperature range may be 50°C, 52°C, 54°C, 56°C, 58°C, 60°C, 61°C, 62°C, 63°C, 64°C, 65°C, 66°C, 67°C, 68°C, 69°C, 70°C, 71°C, 72°C, 73°C, 74°C, 75°C, 76°C, 77°C, 78°C, 79°C, 80°C, 81°C, 82°C, 83°C, 84°C, 85°C, 86°C, 87°C, 88°C, 89°C, 90°C, 91°C, 92°C, 93°C, 94°C, 95°C, 96°C, 97°C, 98°C, 99°C, or 100°C. The temperature of water may be increased to the above temperature range and then the steviol glycoside component may be added.

The step of stirring for dispersing comprises stirring for dispersing the solution in the container under high shear while maintaining the temperature of the solution at the above temperature range. "Under high shear" means that the tip speed (peripheral speed) of the rotor of the stirrer used for stirring for dispersing is 15 m/s or more. The tip speed of the rotor may be 16 m/s or more, 17 m/s or more, 18 m/s or more, 19 m/s or more, 20 m/s or more, 21 m/s or more, 22 m/s or more, 23 m/s or more, 24 m/s or more, 25 m/s or more, 26 m/s or more, 27 m/s or more, 28 m/s or more, 29 m/s or more, 30 m/s or more, 31 m/s or more, 32 m/s or more, 33 m/s or more, 34 m/s or more, 35 m/s or more, 36 m/s or more, 37 m/s or more, 38 m/s or more, or 39 m/s or more. The tip speed of the rotor may be in the range of 15 m/s to 40 m/s 16 m/s to 40 m/s, 17 m/s to 40 m/s, 18 m/s to 40 m/s, 19 m/s to 40 m/s, 20 m/s to 40 m/s, 21 m/s to 40 m/s, 22 m/s to 40 m/s, 23 m/s to 40 m/s, 24 m/s to 40 m/s, 25 m/s to 40 m/s, 26 m/s to 40 m/s, 27 m/s to 40 m/s, 28 m/s to 40 m/s, 29 m/s to 40 m/s, 30 m/s to 40 m/s, 15 m/s to 38 m/s, 15 m/s to 35 m/s, 15 m/s to 30 m/s, 15 m/s to 28 m/s, 15 m/s to 26 m/s, 15 m/s to 24 m/s, 15 m/s to 22 m/s, or 17 m/s to 22 m/s.

The tip speed of the rotor is affected by the diameter of the rotor (the length from the axis of rotation to the tip of the rotor and the like) and the rotational speed (rotation per minute (rpm)). The stirrer and the shape of the rotor used in the step of stirring for dispersing under high shear and the rotational speed are optional as long as the above tip speed of the rotor is obtained. A higher tip speed may be selected when the concentration of rebaudioside D dissolved in the rebaudioside D-containing aqueous composition is high. For example, when the concentration of rebaudioside D is 1,000 ppm, the tip speed of the rotor may be 15 m/s or more, and when the concentration of rebaudioside D is 2,000 ppm, the tip speed may be 17 m/s or more, and when the concentration of rebaudioside D is 3,000 ppm, the tip speed may be 20 m/s or more, although the tip speed is not limited thereto.

The step of stirring for dispersing comprises stirring for dispersing a steviol glycoside component comprising rebaudioside D and water in the presence of a defoaming agent. Details of the defoaming agent are as described above.

An embodiment of the present invention relates to a method for producing a rebaudioside D-containing aqueous composition comprising rebaudioside D at a concentration of 500 ppm by weight or more. The production method comprises a step of stirring for dispersing a steviol glycoside component comprising rebaudioside D and water in the presence of a defoaming agent. Details of water, the steviol glycoside component and the defoaming agent are as described above.

In the following the present invention will be described in detail with reference to Examples. The present invention is not limited to these Examples.

### [Example 1]

### Solution stability of rebaudioside D dissolved at high concentration

950 g of rebaudioside D powder (purity of Reb. D: 90%; the same in the following Examples) and 662.625 g of anhydrous citric acid (purity of citric acid: 99.5%; the same in the following Examples) were added to a container containing 475 liters of pure water (0.05 to 1 mS/m; the same in the following Examples) at room temperature (25°C). The temperature of the solution in the container was increased to about 48°C with a heater, and then the solution was stirred for dispersing under high shear (the tip speed (peripheral speed) of the rotor: 17.95 m/s, the rotational speed: 3,000 rpm) until rebaudioside D was dissolved in water. The temperature of the solution naturally increased by stirring for dispersing and the temperature of the solution in which rebaudioside D was dissolved finally reached 65°C. In-Line Ultra Sanitary Mixers (Model No.: FMX50) made by Silverson was used in the step of stirring for dispersing. Whether or not rebaudioside D was dissolved in water was determined by measuring turbidity (NTU) of the solution by using a turbidity meter (made by Thermo Fisher Scientific, Model No.: TN100IR). When visually observed, the solution was almost transparent when the solution had a turbidity of about 40 NTU, but the stirring for dispersing was continued under high shear until the solution finally had a turbidity of 1 to 4 NTU so that rebaudioside D was sufficiently dissolved in water. The solution after the stirring for dispersing was transparent, suggesting that rebaudioside D was sufficiently dissolved in water. The solution was cooled to room temperature to give a solution (rebaudioside D-containing aqueous composition) which contained rebaudioside D dissolved at high concentration (about 2,100 ppm in terms of the amount added) in water.

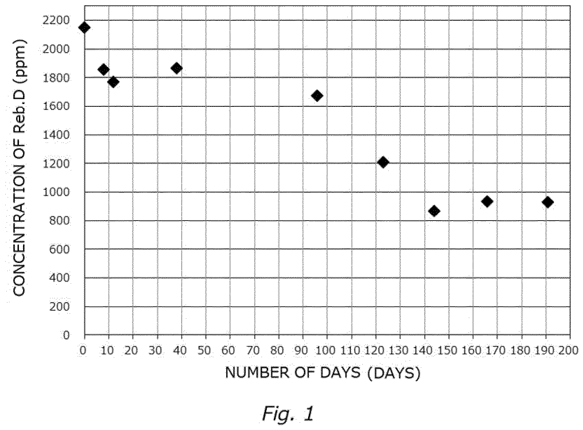

After production of the solution, the solution was sealed and stored in a refrigerator (in an environment of atmospheric pressure and temperature of 10°C) (the lid of the container containing the solution was tightly sealed so that no water evaporated). A predetermined amount of the solution (200 ml) was taken out of the refrigerator and filtrated through a filter having a pore size of 0.45 µm to measure the concentration (ppm) of rebaudioside D in the solution after filtration by liquid chromatography mass spectrometry (LC/MS) to determine the concentration of rebaudioside D. A predetermined amount of the solution (200 ml) was taken out of the refrigerator every predetermined number of days and the concentration of rebaudioside D was measured after filtration with a filter having a pore size of 0.45 µm to determine the change in the concentration of rebaudioside D in the solution over time to evaluate solution stability of rebaudioside D. The results are shown in Table 1 and Fig. 1. Fig. 1 is a plot of the values of Table 1 with the concentration (ppm) after filtration through the filter having a pore size of 0.45 µm on the vertical axis and the number of days after production on the horizontal axis.

**[Table 1]**

| Number of days after production (day) | 0 | 8 | 12 | 38 | 96 | 123 | 144 | 166 | 191 |
|---|---|---|---|---|---|---|---|---|---|
| Concentration (ppm) after filtration with filter having pore size of 0.45 µm (* Concentration C) | 2148.9 | 1856.9 | 1769.5 | 1863. 8 | 1673.7 | 1207.9 | 866.5 | 931.9 | 930.1 |

As shown in Table 1 and Fig. 1, the concentration of rebaudioside D 0 day after production of the solution is 2148.9 ppm, showing that rebaudioside D is dissolved in the solution at high concentration. The concentration of rebaudioside D 8 to 38 days after production of the solution is in the range of 1769.5 ppm to 1863.8 ppm, showing that solution stability of rebaudioside D dissolved at high concentration is maintained. The concentration of rebaudioside D 96 to 166 days after production of the solution is also in the range of 866.5 ppm to 931.9 ppm, showing that solution stability of rebaudioside D dissolved at a high concentration of 500 ppm or more is maintained.

### [Comparative Example 1]

A solution containing rebaudioside D at high concentration was prepared by usual stirring for dispersing as a comparative example. 520 mg of rebaudioside D powder (purity of Reb. D: 90%) and 0.279 g of anhydrous citric acid (purity of citric acid: 99.5%) were added to a container containing 200 ml of pure water (0.05 to 1 mS/m) at room temperature (25°C). The temperature of the solution in the container was increased to about 48°C with a heater, and then the solution was stirred for dispersing using a magnetic stirrer (rotational speed 200 rpm) while gradually increasing the temperature of the solution to 65°C with a heater so that the temperature history was the same as that in Example 1. The turbidity of the solution was measured by the above turbidity meter in the same manner as in Example 1 and stirring for dispersing was continued until the turbidity of the solution was 1 to 4 NTU. The solution was then cooled to room temperature to give a solution in which rebaudioside D was dissolved at high concentration in water.

The solution of Comparative Example 1 was stored and cooled in a refrigerator (10°C) (under atmospheric pressure) so that moisture does not evaporate in the same manner as in Example 1. A predetermined amount of the solution (50 ml) was taken out of the refrigerator and filtrated through a filter having a pore size of 0.45 µm to measure the concentration (ppm) of rebaudioside D in the solution after filtration by liquid chromatography mass spectrometry (LC/MS) in the same manner as in Example 1. A predetermined amount of the solution (50 ml) was taken out of the refrigerator every predetermined number of days and the concentration of rebaudioside D was measured after filtration with a filter having a pore size of 0.45 µm to determine the change in the concentration of rebaudioside D in the solution over time to evaluate solution stability of rebaudioside D.

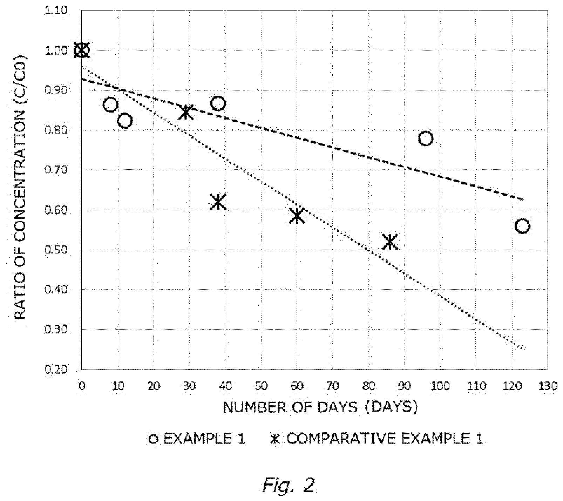

For each of the solution of Example 1 and the solution of Comparative Example 1, the ratio (C/C₀) of concentration C of rebaudioside D a predetermined number of days after the production of the solution to concentration C₀ (ppm) of rebaudioside D 0 day after the production of the solution was calculated to evaluate solution stability of rebaudioside D. The results are shown in Table 2 and Fig. 2.

**[Table 2]**

| Number of days (days) | 0 | 8 | 12 | 29 | 38 | 60 | 86 | 96 | 123 | 144 |
|---|---|---|---|---|---|---|---|---|---|---|
| Example 1 (Ratio C/C₀) | 1.00 | 0.86 | 0.82 | | 0.87 | | | 0.78 | 0.56 | 0.40 |
| Comparative Example 1 (Ratio C/C₀) | 1.00 | | | 0.85 | 0.62 | 0.58 | 0.52 | | | |

Fig. 2 is a plot of the values of Table 2 with the ratio (C/C₀) of the concentration of rebaudioside D in the solution on the vertical axis and the number of days after production (days) on the horizontal axis. Fig. 2 also shows a linear approximation by the least-squares method.

Both the solution of Example 1 and the solution of Comparative Example 1 have a ratio of the concentration of rebaudioside D (C/C₀) of 0.75 or more, 12 to 29 days after production, showing that the solution stability is maintained. However, while the ratio of the concentration of rebaudioside D (C/C₀) was as high as 0.87, 38 days after the production in the solution of Example 1, the ratio of the concentration of rebaudioside D (C/C₀) was significantly reduced to 0.62 in the solution of Comparative Example 1.

Furthermore, the ratio of the concentration (C/C₀) was reduced to 0.58 in the solution of Comparative Example 1 60 days after the production. The ratio of the concentration (C/C₀) was kept relatively high at 0.78 in the solution of Example 1 even 96 days after the production. The ratio of the concentration (C/C₀) in the solution of Example 1 123 days after the production was about the same as the ratio of the concentration (C/C₀) 60 days after the production in Comparative Example 1.

The above shows that the solution of Example 1 (rebaudioside D-containing aqueous composition) prepared by performing the step of stirring for dispersing under high shear has excellent solution stability for a longer time (about two-fold period) compared with the solution of Comparative Example 1 prepared by performing a usual step of stirring for dispersing using a magnetic stirrer.

### [Example 2]

### Action of defoaming of defoaming agent on high concentration rebaudioside D-containing composition

When water containing rebaudioside D at high concentration is stirred for dispersing under high shear, a relatively large amount of foam is generated, and thus it is necessary to eliminate the foam or reduce the amount of the foam generated (collectively referred to as "defoam") to the extent that there is no practical impact. In Example 2, the action of defoaming of the defoaming agent on the rebaudioside D-containing solution was investigated.

Pure water and rebaudioside D were added to a container and citric acid (anhydrous citric acid) was added thereto as a defoaming agent (excluding sample 1). The solution in the container was stirred for dispersing at a pre-determined temperature of dissolution under high shear (the tip speed (peripheral speed) of the rotor of 17.95 m/s, the rotational speed of 3,000 rpm) until rebaudioside D was completely dissolved in water (the turbidity was 1 to 4 NTU) and the solution was cooled to room temperature to give three types of samples 1 to 3. "In-Line Ultra Sanitary Mixers" made by Silverson was used in the step of stirring for dispersing as in Example 1. Details of samples 1 to 3 are shown in Table 3.

**[Table 3]**

| | Pure water (L) | Reb. D (g) | Citric acid (g) | Temperature of dissolution (°C) | Concentration of Reb. D (ppm) | Concentration of citric acid (ppm) |
|---|---|---|---|---|---|---|
| Sample 1 | 300 | 789.5 | 0 | 25 | 2632 | 0 |
| Sample 2 | 300 | 789.5 | 418.5 | 45 | 2632 | 1395 |
| Sample 3 | 300 | 631.6 | 418.5 | 45 | 2105 | 1395 |

The solution of sample 1 contains rebaudioside D at a concentration of about 2,632 ppm but no citric acid. The solution of sample 2 contains rebaudioside D at a concentration of about 2,632 ppm and citric acid at a concentration of about 1,395 ppm. The solution of sample 3 contains rebaudioside D at a concentration of about 2,105 ppm and a citric acid at a concentration of about 1,395 ppm.

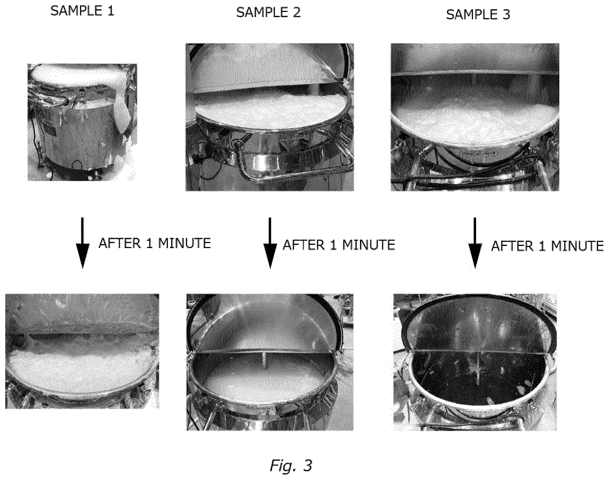

A large amount of foam was generated in all of the samples 1 to 3 immediately after the step of stirring for dispersing. About 1 minute after the step of stirring for dispersing, however, the amount of foam did not still change in sample 1 not containing citric acid, but the amount of foam significantly reduced in sample 2 containing citric acid, and foam almost disappeared in sample 3 (Fig. 3).

The above shows that citric acid has the action of defoaming for foam generated by stirring for dispersing of a solution containing rebaudioside D at high concentration under high shear. Furthermore, when the concentration of citric acid in the solutions is the same, the action of defoaming in sample 3 in which the concentration of rebaudioside D is about 2,105 ppm is larger than that in sample 2 in which the concentration of rebaudioside D is about 2,632 ppm.

### [Example 3]

### Concentration of defoaming agent and rebaudioside D and action of defoaming

In Example 3, how the concentration of the defoaming agent and the concentration of rebaudioside D in the solution affect the action of defoaming (and the action of suppressing generation of foam) was investigated.

Rebaudioside D was added to a container containing pure water and anhydrous citric acid was also added thereto as a defoaming agent (excluding samples 11 to 15). The solution was stirred for dispersing using a magnetic stirrer at a predetermined temperature of dissolution to give 10 samples 11 to 20. Details of samples 11 to 20 are shown in Table 4.

**[Table 4]**

| | Pure water (ml) | Reb. D (mg) | Citric acid (mg) | Temperatu re of dissolution (°C) | Concentrati on of Reb. D (ppm) | Concentr ation of citric acid (ppm) | pH value | Citric acid/ Reb. D (mg/m g) |
|---|---|---|---|---|---|---|---|---|
| Sample 11 | 200 | 5 | 0 | 25 | 25 | 0 | 6.0 | 0 |
| Sample 12 | 200 | 50 | 0 | 25 | 250 | 0 | 6.5 | 0 |
| Sample 13 | 200 | 100 | 0 | 50 | 500 | 0 | 6.9 | 0 |
| Sample 14 | 200 | 300 | 0 | 50 | 1500 | 0 | 6.4 | 0 |
| Sample 15 | 200 | 600 | 0 | 70 | 3000 | 0 | 5.9 | 0 |
| Sample 16 | 200 | 5 | 55.8 | 25 | 25 | 279 | 3.2 | 11.16 |
| Sample 17 | 200 | 50 | 55.8 | 25 | 250 | 279 | 3.2 | 1.116 |
| Sample 18 | 200 | 100 | 55.8 | 50 | 500 | 279 | 3.2 | 0.558 |
| Sample 19 | 200 | 300 | 279 | 50 | 1500 | 1395 | 2.8 | 0.93 |
| Sample 20 | 200 | 600 | 279 | 70 | 3000 | 1395 | 2.8 | 0.465 |

5 ml of the solution of samples 11 to 20 was put in a 15 ml tube and a hand shaking test was performed to measure foaming (height in mm of the portion of foam) and the time of defoaming (time until there is no visual change in defoaming for 10 seconds). The results are shown in Table 5. For example, for sample 11, the tube was shaken by hand for 1 minute in the hand shaking test, and then the tube was left to stand; since there was no change in defoaming for 10 seconds 31 seconds after leaving standing, the time of defoaming is 41 seconds.

Hand shaking test: 5 ml of the solution was put in a 15 ml tube and the tube was continued to be shaken by hand for 1 minute with substantially the same strength, the tube was left to stand, and then foaming (height in mm of the portion of foam) of the solution in the tube and the time of defoaming (seconds) were measured.

**[Table 5]**

| | Hand shaking test | |
|---|---|---|
| | Height (mm) | Time of defoaming (seconds) |
| Sample 11 | 6 | 41 |
| Sample 12 | 9 | 90 |
| Sample 13 | 12 | 158 |
| Sample 14 | Out of range | 319 |
| Sample 15 | Out of range | 210 |
| Sample 16 | 5.5 | 7 |
| Sample 17 | 8.5 | 15 |
| Sample 18 | 11 | 34 |
| Sample 19 | Out of range | 41 |
| Sample 20 | Out of range | 40 |

The time of defoaming of samples 16 to 20 containing citric acid was significantly reduced compared with samples 11 to 15 not containing citric acid. For example, a comparison between samples 11 to 13 and samples 16 to 18, respectively, shows that the time of defoaming was reduced by a factor of about 5 to 6. Furthermore, a comparison between samples 11 to 13 and samples 16 to 18 in Table 5 shows that citric acid also contributes to reduction of foamability. For example, while conditions of sample 11 and sample 16 were the same except for the presence of citric acid, foaming (height 5.5 mm) of sample 16 to which citric acid was added was reduced by about 10% based on foaming (height 6 mm) of sample 11 to which citric acid was not added; this shows that citric acid not only has action of defoaming for foam generated but also contributes to suppress generation of foam itself.

### [Example 4]

### Weight ratio of defoaming agent to rebaudioside D in solution and action of defoaming

In Example 4, how the ratio of the weight of the defoaming agent to the weight of rebaudioside D in the solution affects the action of defoaming was investigated.

Rebaudioside D was added to a container containing pure water and citric acid was added thereto as a defoaming agent (excluding sample 21, sample 30). The solution was stirred for dispersing using a magnetic stirrer at a predetermined temperature of dissolution to give 10 samples 21 to 30. Details of samples 21 to 30 are shown in Table 6. The concentration of Reb. D in the solution of samples 29 to 30 was different from that in samples 21 to 28.

**[Table 6]**

| | Pure water (ml) | Reb. D (mg) | Citri c acid (mg) | Temperature of dissolution (°C) | Concentration of Reb. D (ppm) | pH value | Citric acid/Reb. D (mg/mg) |
|---|---|---|---|---|---|---|---|
| Sample 21 | 50 | 25 | 0 | 25 | 500 | 6.3 | 0 |
| Sample 22 | 500 | 250 | 2.5 | 25 | 500 | 5.2 | 0.01 |
| Sample 23 | 100 | 50 | 2.5 | 25 | 500 | 3.8 | 0.05 |
| Sample 24 | 50 | 25 | 2.5 | 25 | 500 | 3.7 | 0.1 |
| Sample 25 | 50 | 25 | 25 | 50 | 500 | 3.0 | 1 |
| Sample 26 | 50 | 25 | 75 | 25 | 500 | 2.7 | 3 |
| Sample 27 | 50 | 25 | 100 | 25 | 500 | 2.6 | 4 |
| Sample 28 | 50 | 25 | 150 | 50 | 500 | 2.5 | 6 |
| Sample 29 | 500 | 40 | 800 | 25 | 80 | 2.7 | 20 |
| Sample 30 | 500 | 40 | 0 | 25 | 80 | 6.7 | 0 |

The above hand shaking test was performed for the solutions of samples 21 to 30 to measure foaming (height in mm of the portion of foam) and the time of defoaming (seconds). The results are shown in Table 7.

**[Table 7]**

| | Hand shaking test | |
|---|---|---|
| | Height (mm) | Time of defoaming (seconds) |
| Sample 21 | 12.5 | 226 |
| Sample 22 | 12.0 | 71 |
| Sample 23 | 12.5 | 57 |
| Sample 24 | 11.0 | 63 |
| Sample 25 | 12.5 | 35 |
| Sample 26 | 11.5 | 31 |
| Sample 27 | 11.5 | 27 |
| Sample 28 | 13.0 | 30 |
| Sample 29 | 8 | 36 |
| Sample 30 | 7.5 | 109 |

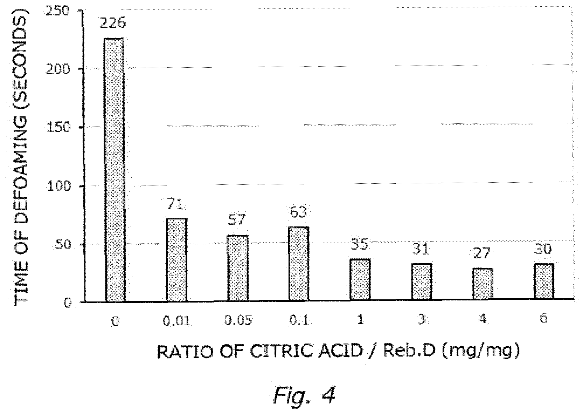

Fig. 4 is a graph with the ratio of citric acid/Reb. D (mg/mg) on the horizontal axis and the time of defoaming (seconds) on the vertical axis for samples 21 to 28. As Fig. 4 shows, when the ratio of citric acid/Reb. D (mg/mg) in the solution was 0.01 or more, the time of defoaming was more significantly reduced (about 1/3 or less) compared with the case where the ratio of citric acid/Reb. D (mg/mg) is 0. Furthermore, when the ratio of citric acid/Reb. D (mg/mg) was 1 or more, the time of defoaming was more significantly reduced (about 1/7 or less). A sufficient action of defoaming can be obtained at a ratio of citric acid/ Reb. D (mg/ mg) in the solution of 0.01 or more, more preferably 0.1 or more, and further preferably 1 or more.

Furthermore, a comparison between samples 29 and 30 shows that the time of defoaming was significantly reduced (about 1/3) due to the presence of citric acid and the action of defoaming of citric acid was found in both cases of a concentration of Reb. D in the solution of 80 ppm and 500 ppm

### [Example 5]

### Defoaming agent other than citric acid

In Example 5, defoaming agents other than citric acid were investigated.

Rebaudioside D was added to a container containing pure water, and anhydrous citric acid, L-ascorbic acid, DL-malic acid, hydrochloric acid, sodium chloride or trisodium citrate was also added thereto as a defoaming agent (excluding sample 31). The solution was stirred for dispersing using a magnetic stirrer at 50°C to give 9 samples 31 to 39. Details of samples 31 to 39 are shown in Table 8.

**[Table 8]**

| | Pure water (ml) | Reb. D (mg) | Type of defoaming agent | Concentration of Reb. D (ppm) | pH value | Defoaming agent/Reb. D (mg/mg) |
|---|---|---|---|---|---|---|
| Sample 31 | 50 | 25 | No defoaming agent | 500 | 6.2 | 0 |
| Sample 32 | 500 | 250 | Sodium chloride | 500 | 6.0 | 0.2 |
| Sample 33 | 50 | 25 | DL-malic acid | 500 | 2.9 | 1.0 |
| Sample 34 | 50 | 25 | Citric acid | 500 | 3.0 | 1.0 |
| Sample 35 | 50 | 25 | Hydrochloric acid | 500 | 2.9 | 2.6 |
| Sample 36 | 50 | 25 | trisodium citrate | 500 | 8.1 | 2.9 |
| Sample 37 | 50 | 25 | trisodium citrate | 500 | 8.5 | 3.2 |
| Sample 38 | 50 | 25 | L-ascorbic acid | 500 | 3.0 | 4.9 |
| Sample 39 | 50 | 25 | Sodium chloride | 500 | 5.6 | 6.0 |

The above hand shaking test was performed for the solutions of samples 31 to 39 to measure foaming (height in mm of the portion of foam) and the time of defoaming (seconds). The results are shown in Table 9.

**[Table 9]**

| | Hand shaking test | |
|---|---|---|
| | Height (mm) | Time of defoaming (seconds) |
| Sample 31 | 13.5 | 209 |
| Sample 32 | 12.5 | 71 |
| Sample 33 | 12.5 | 49 |
| Sample 34 | 12.5 | 35 |
| Sample 35 | 12.0 | 47 |
| Sample 36 | 13.0 | 72 |
| Sample 37 | 12.0 | 35 |
| Sample 38 | 12.0 | 43 |
| Sample 39 | 11.5 | 29 |

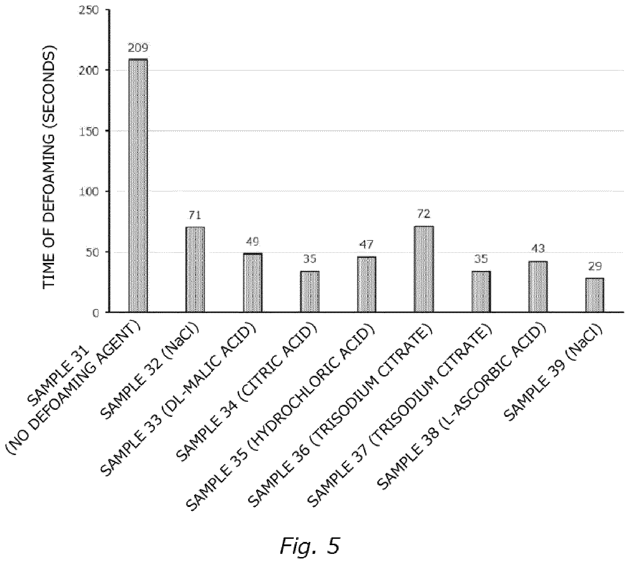

Fig. 5 is a graph with samples 31 to 39 on the horizontal axis and the time of defoaming (seconds) on the vertical axis. Fig. 5 shows that L-ascorbic acid, DL-malic acid, hydrochloric acid, sodium chloride and trisodium citrate have an effect of defoaming on the solution containing rebaudioside D at high concentration similar to citric acid.

Non-limiting embodiments of the present disclosure include the following.
[Embodiment 1] A method for producing a rebaudioside D-containing aqueous composition comprising rebaudioside D at a concentration of 500 ppm by weight or more,
   the method comprising: a step of stirring for dispersing a steviol glycoside component comprising rebaudioside D and water in a temperature range of 40°C to 100°C under high shear at a tip speed (peripheral speed) of a rotor of 15 m/s or more, wherein the steviol glycoside component comprises more than 50% by weight of rebaudioside D based on a total weight of the steviol glycoside component.
[Embodiment 2] The method according to embodiment 1, wherein in the step of stirring for dispersing, the steviol glycoside component and water are stirred in the presence of a defoaming agent.
[Embodiment 3]. The method according to embodiment 2, wherein the defoaming agent is selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, calcium sulfate, a phosphate, a fumarate, a gluconate, a succinate, a lactate, and a mixture of two or more thereof.
[Embodiment 4] The method according to embodiment 2, wherein the defoaming agent is selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, and a mixture of two or more thereof.
[Embodiment 5] The method according to any of embodiments 2 to 4, wherein a ratio of a weight of the defoaming agent (W_{def}) to a weight of rebaudioside D (W_{reb}) (W_{def}/W_{reb}) is 0.01 or more.
[Embodiments 6] The method according to any of embodiments 1 to 5, wherein a concentration of rebaudioside D in the rebaudioside D-containing aqueous composition is 1000 to 5000 ppm by weight.
[Embodiment 7] The method according to any of embodiments 1 to 6, wherein when the rebaudioside D-containing aqueous composition is stored in an environment of atmospheric pressure and a temperature of 10°C after production, a ratio of a concentration of rebaudioside D in the rebaudioside D-containing aqueous composition on day 38 after the production (C₁) to a concentration of rebaudioside D in the rebaudioside D-containing aqueous composition on day 0 of the production (C₀) (C₁/C₀) is 0.75 or more.
[Embodiment 8] The method according to any of embodiments 1 to 7, wherein the rebaudioside D-containing aqueous composition is a concentrated liquid for a drink.
[Embodiment 9] A sweetening composition comprising rebaudioside D at a concentration of 500 ppm by weight or more, water and a steviol glycoside component,
   wherein the steviol glycoside component comprises more than 50% by weight of rebaudioside D based on a total weight of the steviol glycoside component.
[Embodiment 10] The sweetening composition according to embodiment 9, further comprising one or more selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, calcium sulfate, a phosphate, a fumarate, a gluconate, a succinate, a lactate, and a mixture of two or more thereof.
[Embodiment 11] The sweetening composition according to embodiment 9, further comprising one or more selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, and a mixture of two or more thereof.
[Embodiment 12] The sweetening composition according to any of embodiments 9 to 11, which does not comprise one or more of stevioside, polyol and a hydrophilic polymer.
[Embodiment 13] The sweetening composition according to any of embodiments 9 to 12, wherein when the sweetening composition is stored in an environment of atmospheric pressure and a temperature of 10°C after production, a ratio of a concentration of rebaudioside D in the sweetening composition on day 38 after the production (C₁) to a concentration of rebaudioside D in the sweetening composition on day 0 of the production (C₀) (C₁/C₀) is 0.75 or more.
[Embodiment 14] The sweetening composition according to any of embodiments 9 to 13, which is a concentrated liquid for a drink.
[Embodiment 15] A drink comprising the sweetening composition according to embodiment 14 and water for dilution.
[Embodiment 16] The drink according to embodiment 15, further comprising one or more selected from the group consisting of rebaudioside A, rebaudioside B, rebaudioside E, rebaudioside F, rebaudioside M, rebaudioside N, stevia extract, a steviol glycoside having a structure to which rhamnose is bonded, stevioside, mogroside V, sucrose, high fructose corn syrup, erythritol, corn syrup, aspartame, sucralose, acesulfame potassium, saccharin and xylitol.
[Embodiment 17] A method for producing a rebaudioside D-containing aqueous composition comprising rebaudioside D at a concentration of 500 ppm by weight or more,
   the method comprising a step of stirring for dispersing a steviol glycoside component comprising rebaudioside D and water in the presence of a defoaming agent.
[Embodiment 18] The method according to embodiment 17, wherein the rebaudioside D-containing aqueous composition comprises more than 50% by weight of rebaudioside D based on a total weight of the steviol glycoside component.

## Claims

1. A sweetening composition comprising rebaudioside D at a concentration of 500 ppm by weight or more, water and a steviol glycoside component including rebaudioside D, and a defoaming agent, wherein the defoaming agent is selected from the group consisting of citric acid, L-ascorbic acid, DL-malic acid, hydrochloric acid, a citrate, an L-ascorbate, a DL-malate, potassium chloride, sodium chloride, magnesium chloride, calcium chloride, and a mixture of two or more thereof,
wherein the steviol glycoside component comprises more than 50% by weight of rebaudioside D based on a total weight of the steviol glycoside component, and
wherein a ratio of a weight of the defoaming agent (W_{def}) to a weight of rebaudioside D (W_{reb}) (W_{def}/W_{reb}) is 0.01 or more.

2. The sweetening composition according to claim 1 , which does not comprise one or more of stevioside, polyol and a hydrophilic polymer.

3. The sweetening composition according to claim 1 or 2, wherein when the sweetening composition is stored in an environment of atmospheric pressure and a temperature of 10°C after production, a ratio of a concentration of rebaudioside D in the sweetening composition on day 38 after the production (Ci) to a concentration of rebaudioside D in the sweetening composition on day 0 of the production (C₀) (C₁/C₀) is 0.75 or more.

4. The sweetening composition according to any of claims 1 to 3, which is a concentrated liquid for a drink.

5. A drink comprising the sweetening composition according to claim 4 and water for dilution.
